# EUROPEAN PATENT SPECIFICATION

(11) **EP 4 410 903 B1**
(45) Date of publication and mention of the grant of the patent: **04.11.2026**
(21) Application number: 22876323.1
(22) Date of filing: 28.09.2022
(51) Int. Cl.: C09D 5/00, C09D 133/14, C09D 133/26, C09D 7/20, C09D 7/61, C09K 3/18

(54) **ANTIFOGGING AGENT COMPOSITION, AND ANTIFOGGING ARTICLE**
BESCHLAGVERHINDERNDE ZUSAMMENSETZUNG UND BESCHLAGVERHINDERNDER ARTIKEL
COMPOSITION D'AGENT ANTIBUÉE ET ARTICLE ANTIBUÉE

(30) Priority: 30.09.2021 JP 2021160526
(43) Date of publication of application: 07.08.2024
(73) Proprietor: NOF Corporation, Shibuya-ku Tokyo 150-6019 (JP)
(72) Inventor: TAKAHASHI,Yuki, Chita-gun, Aichi 470-2373 (JP); NITO,Yoshinori, Chita-gun, Aichi 470-2373 (JP); KANO,Takamitsu, Chita-gun, Aichi 470-2373 (JP)
(74) Representative: Hoffmann Eitle
(86) International application number: PCT/JP2022/036131
(87) International publication number: WO 2023/054457

(56) References cited:
- JP-A- 2009 013 329
- JP-A- 2015 129 248
- JP-A- 2016 155 923
- JP-A- 2017 165 878
- JP-A- 2018 150 470
- JP-A- 2019 006 881

## Description

### TECHNICAL FIELD

The present invention relates to an antifogging agent composition and an antifogging article.

### BACKGROUND ART

When a highly-humid air enters a light chamber in a vehicle lighting device such as an automobile headlamp and a lens is cooled by outside air, rainfall or the like, fogging may occur by condensation of moisture on the inner surface thereof. As a result, the luminance of the vehicle lamp decreases and the aesthetic appearance of the lens surface is impaired, which may cause users discomfort. In order to prevent such lens fogging, a method is known in which an antifogging coating is formed by applying an antifogging agent to the part where fogging occurs (Patent Documents 1 to 3). Antifogging coatings are generally required to exhibit transparency and water resistance and not to cause liquid dripping during painting.

For example, Patent Document 1 discloses an antifogging agent composition containing a specific copolymer, a surfactant, and an acid catalyst. In addition, Patent Document 2 discloses an antifogging agent composition containing a specific copolymer, specific silica particles, and a hydrolytic condensate of a specific siloxane compound. Furthermore, Patent Document 3 discloses an antifogging agent composition containing a hydrophilic compound and a metal oxide.

Patent document 4 discloses a copolymer comprising dimethyl acrylamide, N-methylol acrylamide and 2-hydroxyethyl acrylate. An antifogging composition is prepared with said polymer, isopropanol, methyl ethyl ketone and 3-methoxy-3-methyl-1 - butanol.

### PRIOR ART DOCUMENTS

### PATENT DOCUMENTS

Patent Document 1: JP-A-2019-6881
Patent Document 2: JP-A-2018-2865
Patent Document 3: WO 2019/163918
Patent Document 4: JP 2009 013329

### SUMMARY OF THE INVENTION

### PROBLEMS TO BE SOLVED BY THE INVENTION

In antifogging coatings, when a water film is formed on the antifogging coating surface by water-soluble components such as surfactants, and a phenomenon (water dripping) in which water in the water film locally runs down may occur. Water-soluble components from the antifogging coating are dissolved into the water film, and when water dripping occurs and the water evaporates, the dissolved water-soluble components precipitate on the antifogging coating surface, leaving shapes of water dripping marks, and the appearance of vehicle lighting device becomes poor, which is a problem. In addition, when a water film is repeatedly formed within the lens, the antifogging properties (repeatable antifogging properties) may decrease.

In order to cope with the problem, the antifogging agent composition disclosed in Patent Document 1 contains a specific (meth)acrylate copolymer and a specific surfactant to exhibit repeatable antifogging properties and make water dripping marks less noticeable, but water dripping marks may be generated when a large amount of surfactant is added to impart high antifogging properties.

In addition, the antifogging agent compositions disclosed in Patent Documents 2 and 3 contain an inorganic component and an organic component in combination to suppress the generation of water dripping marks, but in a case where a large amount of inorganic component is contained, aggregation of the inorganic components occurs, resulting in a problem that transparency of the coating decreases and a problem that repeatable antifogging properties decrease.

Meanwhile, there are a case where preliminary drying is performed after painting in order to obtain a smooth antifogging coating when an antifogging agent is painted on an automobile headlamp lens and the like, and a case where it is difficult to paint the lens in a uniform thickness and some portions may be painted with a thick film when an antifogging agent is painted on a lens having a complicated shape.

In a case where painting is carried out under conditions as above, the antifogging agent compositions disclosed in Patent Documents 2 and 3 have a problem that close contact properties after preliminary drying decrease when a thin film is painted and a problem that cracking (a phenomenon in which rupture and cracking occur in the antifogging coating) occur in the portions where a thick film is painted.

In view of the above circumstances, an object of the present invention is to provide an antifogging agent composition, which exhibits excellent transparency, water resistance, initial close contact properties, antifogging properties, and repeatable antifogging properties, is less likely to generate water dripping marks, and can form an antifogging coating that suppresses liquid dripping during painting, exhibits close contact properties after preliminary drying when a thin film is painted, and suppresses cracking when a thick film is painted.

### MEANS FOR SOLVING THE PROBLEMS

In other words, the present invention relates to an antifogging agent composition containing a copolymer (A), a colloidal silica (B), and a solvent (C), in which
the copolymer (A) is a (meth)acrylate copolymer obtained from a monomer mixture containing
a monomer (a-1) represented by General Formula (1): 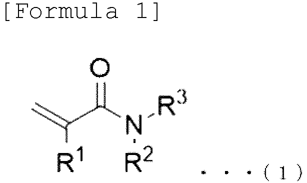
(in General Formula (1), R¹ is a hydrogen atom or a methyl group and R² and R³ are independently a hydrogen atom or a linear or branched alkyl group having 1 to 4 carbon chains);
a monomer (a-2) represented by General Formula (2): 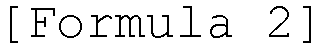 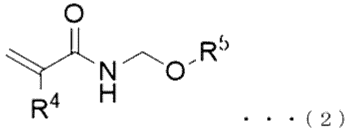
(in General Formula (2), R⁴ is a hydrogen atom or a methyl group and R⁵ is a hydrogen atom or a linear or branched alkyl group having 1 to 8 carbon atoms); and
one or more monomers (a-3) selected from the group consisting of
a monomer having a hydroxyl group and being represented by General Formula (3): 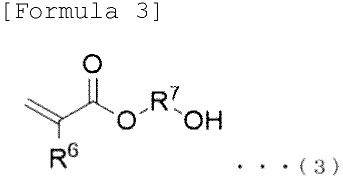
(in General Formula (3), R⁶ is a hydrogen atom or a methyl group and R⁷ is a linear or branched alkylene group having 1 to 8 carbon atoms), and
a monomer having a hydroxyl group and being represented by General Formula (4): 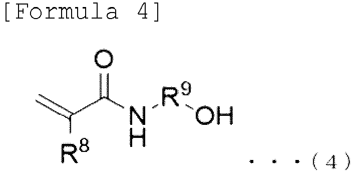
(in General Formula (4), R⁸ is a hydrogen atom or a methyl group and R⁹ is a linear or branched alkylene group having 2 to 8 carbon atoms),
the solvent (C) contains water (C-1);
a monohydric alcohol-based solvent (C-2) having 1 to 4 carbon atoms;
a solvent (C-3) having at least one functional group selected from the group consisting of a ketone group, an ester group, two or more ether groups, a thioketone group, and an amide group in a molecule and having a boiling point of 100°C or more and 200°C or less at 1 atmosphere; and
a glycol ether-based solvent (C-4) represented by General Formula (5): R¹⁰-O-R¹¹-OH
(in General Formula (5), R¹⁰ is a linear or branched alkyl group having 1 or more and 8 or less carbon atoms, R¹¹ is a linear or branched alkylene group having 2 or more and 5 or less carbon atoms, and a total number of carbon atoms in R¹⁰ and R¹¹ is 3 or more and 12 or less),
a sum of the water (C-1), the solvent (C-2), the solvent (C-3), and the solvent (C-4) is 550 to 1350 parts by mass with respect to 100 parts by mass of a sum of the copolymer (A) and the colloidal silica (B), and
a mass ratio ((C-3)/(C-4)) of the solvent (C-3) to the solvent (C-4) is 0.3 to 15.

The present invention also relates to an antifogging article including an antifogging coating formed from the antifogging agent composition on a base material.

### EFFECT OF THE INVENTION

The details of action mechanism of the effect of the antifogging agent composition according to the present invention are not completely known, but are estimated as follows. It is to be noted that the present invention should not be interpreted based on only this action mechanism.

The antifogging agent composition of the present invention contains a copolymer (A), colloidal silica (B), and a solvent (C). Since the copolymer (A) contains the monomers (a-1) to (a-3), mainly, antifogging properties of the antifogging coating are enhanced based on the monomer (a-1), a crosslinked structure is formed in the antifogging coating and the water solubility of the copolymer (A) decreases based on the monomer (a-2) so that water dripping marks are less likely to be generated, and the compatibility between the copolymer (A) and the colloidal silica (B) is enhanced and the copolymer (A) and silica form a firm antifogging coating through a noncovalent bond based on (a-3) so that the performance that water resistance of the antifogging coating is improved and water dripping marks are less likely to be generated is exerted. The colloidal silica (B) improves hydrophilicity (antifogging properties) of the antifogging coating due to the hydrophilic groups on the silica surface and inside silica, and decreases water solubility of the antifogging coating by the cohesive force between particles of silica after film formation so that the performance that water dripping marks are less likely to be generated and the water resistance is enhanced is exerted. Since the solvent (C) contains the (C-1) to (C-4), mainly, the solubility of the copolymer (A) is improved and whitening of the antifogging coating due to aggregation of the copolymer (A) is suppressed based on water (C-1) so that transparency of the antifogging coating is enhanced, the volatility of the solvent (C) is improved and the solid content and viscosity during coating of the base material increase, which suppresses liquid dripping during painting, when the antifogging agent composition is painted based on the highly volatile monohydric alcohol solvent (C-2) having 1 to 4 carbon atoms, close contact properties after preliminary drying are enhanced when a thin film is painted based on the solvent (C-3) having a specific functional group that exhibits a property to permeate the base material (polycarbonate, polymethyl methacrylate), and the property of the solvent (C-3) to permeate the base material is reduced and crack generation during thick film painting can be thus suppressed based on the glycol ether-based solvent (C-4) that does not permeate the base material(polycarbonate, polymethyl methacrylate) and has a high boiling point. In addition, by containing the (C-1) to (C-4) in specific amounts so that the solubility of the copolymer (A) and the dispersibility of the colloidal silica (B) are enhanced, whitening of the antifogging coating due to aggregation of the copolymer (A) and aggregation of silica is suppressed and a highly transparent antifogging coating can be obtained.

### MODE FOR CARRYING OUT THE INVENTION

The antifogging agent composition of the present invention contains a copolymer (A), colloidal silica (B), and a solvent (C).

### <Copolymer (A)>

The copolymer (A) of the present invention is a (meth)acrylate copolymer obtained from a monomer mixture containing the following monomer (a-1), monomer (a-2), and monomer (a-3).

### <Monomer (a-1)>

The monomer (a-1) is represented by General Formula (1): 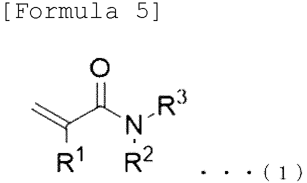 (in General Formula (1), R¹ is a hydrogen atom or a methyl group and R² and R³ are independently a hydrogen atom or a linear or branched alkyl group having 1 to 4 carbon chains).

The monomer (a-1) mainly has the function of enhancing the hydrophilicity of the copolymer (A) and enhancing the antifogging properties of the antifogging coating. Examples of the monomer (a-1) include acrylamide, N-methyl (meth)acrylamide, N-ethyl (meth)acrylamide, N-N-propyl (meth)acrylamide, N-isopropyl (meth)acrylamide, N,N-dimethyl (meth)acrylamide, and N,N-diethyl (meth)acrylamide. From the viewpoint of excellent antifogging properties and close contact properties between the antifogging coating and the base material, N,N-dimethyl(meth)acrylamide is preferable. As the monomer (a-1), at least one monomer (a-1) is used, and two or more monomers (a-1) may be used in combination.

### <Monomer (a-2)>

The monomer (a-2) is represented by General Formula (2): 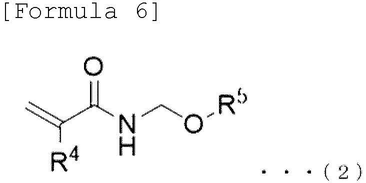 (in General Formula (2), R⁴ is a hydrogen atom or a methyl group and R⁵ is a hydrogen atom or a linear or branched alkyl group having 1 to 8 carbon atoms).

The monomer (a-2) mainly has the function of making it difficult to generate water dripping marks by crosslinking molecules to each other through a dehydration condensation reaction between N-methylol groups or N-methylol ether groups and a dealcoholization reaction between N-methylol groups or N-methylol ether groups and hydroxyl groups to form a crosslinked structure in the copolymer (A) and decreasing the water solubility of the copolymer (A). Examples of the monomer (a-2) include N-methylol (meth)acrylamide, N-methoxymethyl (meth)acrylamide, N-propoxymethyl (meth)acrylamide, N-butoxymethyl (meth)acrylamide, and N-isobutoxymethyl (meth)acrylamide. From the viewpoint of making it difficult to generate water dripping marks of the antifogging agent composition, N-methylol (meth)acrylamide is preferable. As the monomer (a-2), at least one monomer (a-2) is used, and two or more monomers (a-2) may be used in combination.

### <Monomer (a-3)>

The monomer (a-3) is one or more selected from the group consisting of
a monomer having a hydroxyl group and being represented by General Formula (3): 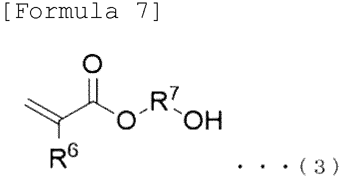
(in General Formula (3), R⁶ is a hydrogen atom or a methyl group and R⁷ is a linear or branched alkylene group having 1 to 8 carbon atoms), and
a monomer having a hydroxyl group and being represented by General Formula (4): 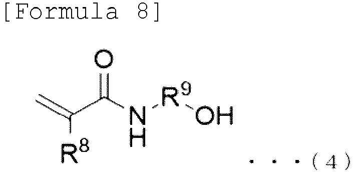
(in General Formula (4), R⁸ is a hydrogen atom or a methyl group and R⁹ is a linear or branched alkylene group having 2 to 8 carbon atoms).

The monomer (a-3) mainly has the function of exerting the performance that water resistance of the antifogging coating is improved and at the same time water dripping marks are less likely to be generated by enhancing the compatibility between the copolymer (A) and the colloidal silica (B) and forming a firm antifogging coating. Examples of the monomer (a-3) include 2-hydroxyethyl (meth)acrylate, 2-hydroxypropyl (meth)acrylate, 4-hydroxybutyl (meth)acrylate, 6-hydroxyhexyl (meth)acrylate, N-(2-hydroxyethyl) (meth)acrylamide, and 4-hydroxybutyl (meth)acrylamide. From the viewpoint of excellent water resistance of the antifogging coating, 2-hydroxyethyl (meth)acrylate and N-(2-hydroxyethyl) (meth)acrylamide are preferable. As the monomer (a-3), at least one monomer (a-3) is used, and two or more monomers (a-3) may be used in combination.

The content of the monomer (a-1) is preferably 30% to 80% by mass in the monomer mixture. The content of the monomer (a-1) is more preferably 40% by mass or more, still more preferably 50% by mass or more in the monomer mixture from the viewpoint of enhancing antifogging properties of the copolymer and transparency of the antifogging coating. The content of the monomer (a-1) is more preferably 75% by mass or less, still more preferably 65% by mass or less in the monomer mixture from the viewpoint of suppressing water solubility of the copolymer (A) and enhancing water resistance. In other words, the content of the monomer (a-1) is more preferably 40% by mass or more and 75% by mass or less, still more preferably 50% by mass or more and 65% by mass or less in the monomer mixture from the viewpoint of enhancing antifogging properties of the copolymer and transparency of the antifogging coating, suppressing water solubility of the copolymer (A), and enhancing water resistance.

The content of the monomer (a-2) is preferably 5% to 35% by mass in the monomer mixture. The content of the monomer (a-2) is more preferably 10% by mass or more, still more preferably 15% by mass or more in the monomer mixture from the viewpoint of forming a crosslinked structure in the copolymer (A) and making it difficult to generate water dripping marks. The content of the monomer (a-2) is more preferably 30% by mass or less, still more preferably 25% by mass or less in the monomer mixture from the viewpoint of enhancing transparency of the antifogging coating and close contact properties with the base material. In other words, the content of the monomer (a-2) is more preferably 10% by mass or more and 30% by mass or less, still more preferably 15% by mass or more and 25% by mass or less in the monomer mixture from the viewpoint of forming a crosslinked structure in the copolymer (A), making it difficult to generate water dripping marks, and enhancing transparency of the antifogging coating and close contact properties with the base material.

The content of the monomer (a-3) is preferably 5% to 35% by mass in the monomer mixture. The content of the monomer (a-3) is more preferably 10% by mass or more, still more preferably 15% by mass or more in the monomer mixture from the viewpoint of improving water resistance of the antifogging coating. The content of the monomer (a-3) is more preferably 30% by mass or less, still more preferably 25% by mass or less in the monomer mixture from the viewpoint of enhancing transparency of the antifogging coating and close contact properties with the base material. In other words, the content of the monomer (a-3) is more preferably 10% by mass or more and 30% by mass or less, still more preferably 15% by mass or more and 25% by mass or less in the monomer mixture from the viewpoint of improving water resistance of the antifogging coating and enhancing transparency of the antifogging coating and close contact properties with the base material.

### <Method for producing (meth)acrylate copolymer>

The (meth)acrylate copolymer is obtained by copolymerizing the monomer mixture. The structure of the copolymer may be any structure of a random copolymer, an alternating copolymer, a block copolymer, or a graft copolymer, but a random copolymer is preferable from the viewpoint that the effect of the antifogging agent composition, such as antifogging properties, can be improved as well as the antifogging agent composition can easily be prepared. As the polymerization method for obtaining the copolymer, various known polymerization methods such as radical polymerization, cationic polymerization, anionic living polymerization, and cationic living polymerization may be employed, but radical polymerization is particularly preferable from the perspective of ease of industrial productivity and versatile performance. As radical polymerization, usual bulk polymerization, suspension polymerization, solution polymerization, and emulsion polymerization may be employed, but solution polymerization is preferable from the viewpoint that the product after polymerization can directly be used as an antifogging agent composition.

Examples of the polymerization solvent used in the solution polymerization include alcohol-based solvents such as water, methanol, ethanol, 1-propanol, 2-propanol, and diacetone alcohol; alcohol ether-based solvents such as ethylene glycol monomethyl ether, ethylene glycol monoethyl ether, propylene glycol monomethyl ether, propylene glycol monoethyl ether, 3-methoxybutanol, and 3-methoxy-3-methylbutanol; ketone-based solvents such as acetone, methyl ethyl ketone, methyl isobutyl ketone, and cyclohexanone; ether-based solvents such as tetrahydrofuran and dioxane; ester-based solvents such as methyl acetate, ethyl acetate, n-butyl acetate, isobutyl acetate, t-butyl acetate, methyl lactate, and ethyl lactate; aromatic solvents such as benzene, toluene, and xylene; and amide-based solvents such as formamide and dimethylformamide. Among these, water, alcohol-based solvents, and alcohol ether-based solvents are preferable. The polymerization solvent may be used singly or in combination of two or more types thereof.

As the radical polymerization initiator, generally used organic peroxides, azo compounds, and the like may be used. Examples of the organic peroxides include benzoyl peroxide, 3,5,5-trimethylhexanoyl peroxide, t-butyl peroxy-2-hexanoatelate, t-butyl peroxy pivalate, and t-hexyl peroxy pivalate. Examples of the azo compounds include 2,2'-azobisisobutyronitrile and 2,2'-azobis-2-methylbutyronitrile. The radical polymerization initiator may be used singly or in combination of two or more types thereof.

The amount of the radical polymerization initiator added is preferably 0.01 to 5 parts by mass with respect to 100 parts by mass of the monomer mixture. The radical polymerization initiator is preferably added dropwise into a reaction vessel during polymerization from the perspective of easy control of heat generation by polymerization. The temperature at which the polymerization reaction is conducted is appropriately changed depending on the type of radical polymerization initiator used, but is preferably 30°C to 150°C, more preferably 40°C to 100°C from the perspective of industrial production.

From the viewpoint of imparting water resistance to the antifogging coating, the number average molecular weight (Mn) of the (meth)acrylate copolymer is preferably 3,000 or more, more preferably 10,000 or more, still more preferably 50,000 or more. From the viewpoint of increasing the viscosity of the antifogging agent composition and suppressing liquid dripping, the number average molecular weight (Mn) of the (meth)acrylate copolymer is preferably 500,000 or less, more preferably 300,000 or less, still more preferably 200,000 or less.

The number average molecular weight (Mn) of the (meth)acrylate copolymer can be determined by GPC.

### <Measurement conditions of number average molecular weight (Mn) >

Analyzer: HLC-8320GPC (manufactured by TOSOH CORPORATION)
Guard column: Shodex GPC KD-G 4A (manufactured by Resonac Holdings Corporation)
1st column: Shodex GPC KD-806M 4A (manufactured by Resonac Holdings Corporation)
2nd column: Shodex GPC KD-803 4A (manufactured by Resonac Holdings Corporation)
3rd column: Shodex GPC KD-802.5 4A (manufactured by Resonac Holdings Corporation)
Detector: Suggestion refractometer
Column temperature: 40°C
Developing solvent: Dimethylformamide
Reference material: polystyrene
Flow velocity: 0.175 mL/min
Sample concentration: 0.2% by mass
Injection volume: 150 µL

### <Colloidal silica (B)>

The colloidal silica (B) of the present invention has an effect of improving the antifogging properties due to the hydrophilic groups on the silica surface and inside silica as well as the function of making it difficult to generate water dripping marks and enhancing water resistance by decreasing water solubility of the antifogging coating by the cohesive force between particles of silica after film formation.

The colloidal silica (B) is one in a state in which silica particles represented by the chemical composition formula of SiO₂ are dispersed in a medium to form a colloid. Examples of the solvent include methanol, ethanol, 2-propanol, 1-butanol, xylene, dimethylformamide, and water. Among these, methanol, ethanol, 2-propanol, and water are preferable, and 2-propanol and water are more preferable. The colloidal silica (B) may be one in which the surface of silica particles is modified with a surface treatment agent such as a silane compound. As the colloidal silica (B), at least one type of colloidal silica (B) is used, and two or more types of colloidal silica (B) may be used in combination.

The colloidal silica (B) has an average particle diameter of preferably 10 to 100 nm, more preferably 10 to 30 nm. The average particle diameter is an average primary particle diameter, and is indicated by the median diameter (D50) of volume-based particle size distribution measured by dynamic light scattering. When the average particle diameter is less than 10 nm, close contact properties of the obtained antifogging coating with the base material tend to decrease, and when the average particle diameter is more than 100 nm, transparency of the obtained antifogging coating tend to decrease. Examples of the shape of the colloidal silica (B) include a particle shape, a chain shape, and a pearl necklace shape. Among these, the shape is preferably a particle shape from the viewpoint of enhancing transparency of the antifogging coating.

Examples of commercially available products of the colloidal silica (B) include those of trade names: "SNOWTEX-XS", "SNOWTEX-S", "SNOWTEX-30", "SNOWTEX-50-T", "SNOWTEX-30 L", "SNOWTEX-YL", "SNOWTEX-ZL", "SNOWTEX-MP-1040", "SNOWTEX-UP", "SNOWTEX-PS-S", "SNOWTEX-PS-M", "SNOWTEX-OXS", "SNOWTEX-OS", "SNOWTEX-O", "SNOWTEX-O-40", "SNOWTEX-OL", "SNOWTEX-OYL", "SNOWTEX-OUP", "SNOWTEX-PS-SO", "SNOWTEX-PS-MO", "SNOWTEX-NXS", "SNOWTEX-NS", "SNOWTEX-N", "SNOWTEX-N-40", "SNOWTEX-CXS", "SNOWTEX-C", "SNOWTEX-CM", "SNOWTEX-AK", "SNOWTEX-AK-L", "SNOWTEX-AK-Y", "Methanol Silica Sol", "MA-ST-M", "MA-ST-M", "MA-ST-L", "IPA-ST", "IPA- ST-L", "IPA-ST-ZL", "IPA-ST-UP", "EG-ST", "NPC-ST-30", "PGM-ST", and "DMAC-ST" (manufactured by Nissan Chemical Corporation). Among these, "SNOWTEX-O", "SNOWTEX-O-40", "SNOWTEX-OL", "SNOWTEX-OYL", "SNOWTEX-N", "SNOWTEX-N-40", "Methanol Silica Sol", "MA-ST-M", "MA-ST-L", "IPA-ST", "IPA- ST-L", and "IPA-ST-ZL", which have an average particle diameter of 10 to 100 nm, has a particle shape, and use water or a monohydric alcohol having 1 to 4 carbon atoms as a dispersion medium, are preferable, and "SNOWTEX-O", "SNOWTEX-O-40", SNOWTEX-N", "SNOWTEX-N-40", "Methanol Silica Sol", "MA-ST-M", and "IPA-ST", which have an average particle diameter of 10 to 30 nm, have a particle shape, and use water or a monohydric alcohol having 1 to 4 carbon atoms as a dispersion medium, are more preferable.

### <Solvent (C)>

The solvent (C) of the present invention contains water (C-1), a monohydric alcohol-based solvent (C-2) having 1 to 4 carbon atoms, a solvent (C-3) having at least one functional group selected from the group consisting of a ketone group, an ester group, two or more ether groups, a thioketone group, and an amide group in the molecule and having a boiling point of 100°C or more and 200°C or less at 1 atmosphere, and a glycol ether-based solvent (C-4) represented by General Formula (5): R¹⁰-O-R¹¹-OH (in General Formula (5), R¹⁰ is a linear or branched alkyl group having 1 or more and 8 or less carbon atoms, R¹¹ is a linear or branched alkylene group having 2 or more and 5 or less carbon atoms, and the total number of carbon atoms in R¹⁰ and R¹¹ is 3 or more and 12 or less).

### <Solvent (C-1)>

The water (C-1) mainly improves the solubility of the copolymer (A) in the antifogging agent composition, and suppresses whitening of the antifogging coating due to aggregation of the copolymer (A) to enhance transparency of the antifogging coating.

### <Solvent (C-2)>

The solvent (C-2) is a monohydric alcohol having a linear or branched alkyl group having 1 to 4 carbon atoms. The solvent (C-2) mainly has the function of suppressing the occurrence of liquid dripping during painting by enhancing the volatility of the solvent and increasing the solid content and viscosity during coating of the base material when the antifogging agent composition is painted. As the solvent (C-2), at least one solvent (C-2) is used, and two or more solvents (C-2) may be used in combination.

Examples of the solvent (C-2) include methanol, ethanol, 1-propanol, 2-propanol, 1-butanol, 2-butanol, isobutyl alcohol, and t-butanol. A monohydric alcohol having 1 to 3 carbon atoms is preferable from the viewpoint of enhancing volatility of the solvent (C) to suppress liquid dripping during painting and enhancing the solubility of the copolymer (A) and the dispersibility of the colloidal silica (B) to suppress whitening of the antifogging coating due to aggregation of the copolymer (A) and aggregation of silica and improve transparency of the antifogging coating.

### <Solvent (C-3)>

The solvent (C-3) is a solvent that has at least one functional group selected from the group consisting of a ketone group, an ester group, two or more ether groups, a thioketone group, and an amide group in the molecule and has a boiling point of 100°C or more and 200°C or less at 1 atmosphere. The solvent (C-3) mainly has the function of improving close contact properties after preliminary drying when the antifogging agent composition is painted into a thin film. As the solvent (C-3), at least one solvent (C-3) is used, and two or more solvents (C-3) may be used in combination.

Examples of the solvent (C-3) include diethyl ketone, ethylpropyl ketone, dipropyl ketone, diisopropyl ketone, dibutyl ketone, methyl isobutyl ketone, cyclopentanone, cyclohexanone, cycloheptanone, diacetone alcohol, mesityl oxide, n-butyl acetate, isobutyl acetate, methyl lactate, ethyl lactate, acetylacetone, methyl acetoacetate, ethyl acetoacetate, ethylene glycol monomethyl ether acetate, propylene glycol monomethyl ether acetate, 1,2-diethoxyethane, diethylene glycol dimethyl ether, diethylene glycol ethyl methyl ether, diethylene glycol diethyl ether, dipropylene glycol dimethyl ether, 1,4-dioxane, dimethyl sulfoxide, N,N-dimethylformamide, and dimethylacetamide.

The solvent (C-3) preferably has a boiling point within the range of 130°C to 170°C at 1 atmosphere from the viewpoint of suppressing cracking during thick film painting and improving close contact properties during thin film painting.

### <Solvent (C-4)>

The solvent (C-4) is a glycol ether-based solvent that is represented by General Formula (5): R¹⁰-O-R¹¹-OH (in General Formula (5), R¹⁰ is a linear or branched alkyl group having 1 or more and 8 or less carbon atoms, R¹¹ is a linear or branched alkylene group having 2 or more and 5 or less carbon atoms, and the total number of carbon atoms in R¹⁰ and R¹¹ is 3 or more and 12 or less). The solvent (C-4) mainly has the function of reducing the property of (C-3) to permeate the base material and suppressing crack generation in a case where the antifogging agent composition is painted into a thick film. As the solvent (C-4), at least one solvent (C-4) is used, and two or more solvents (C-4) may be used in combination.

In the solvent (C-4), examples of the solvent represented by General Formula (5) include ethylene glycol monomethyl ether, ethylene glycol monoethyl ether, ethylene glycol mono-1-propyl ether, ethylene glycol monoisopropyl ether, ethylene glycol mono-1-butyl ether, ethylene glycol monoisobutyl ether, ethylene glycol mono-t-butyl ether, ethylene glycol mono-1-hexyl ether, ethylene glycol mono-2-ethylhexyl ether, propylene glycol monomethyl ether, propylene glycol monoethyl ether, propylene glycol-1-monopropyl ether, propylene glycol monoisopropyl ether, propylene glycol mono-1-butyl ether, 3-methoxy-1-butanol, and 3-methoxy-3-methyl-1-butanol.

It is preferable that the difference in boiling point between the solvent (C-4) and the solvent (C-3) at 1 atmosphere is within 20°C from the viewpoint of reducing permeation of the solvent (C-3) into the base material when the antifogging agent composition is thermoset and suppressing crack generation during thick film painting.

The content of the water (C-1) is preferably 50 to 550 parts by mass with respect to 100 parts by mass of the sum of the copolymer (A) and the colloidal silica (B). The content of the water (C-1) is more preferably 120 parts by mass or more, still more preferably 225 parts by mass or more with respect to 100 parts by mass of the sum of the copolymer (A) and the colloidal silica (B) from the viewpoint of improving transparency of the antifogging coating. The content of the water (C-1) is more preferably 435 parts by mass or less, still more preferably 355 parts by mass or less with respect to 100 parts by mass of the sum of the copolymer (A) and the colloidal silica (B) from the viewpoint of suppressing air bubbles generated during painting by the increase in viscosity of the antifogging agent composition from remaining in the antifogging coating after curing and enhancing transparency of the antifogging coating. In other words, the content of the water (C-1) is more preferably 120 parts by mass or more and 435 parts by mass or less, still more preferably 225 parts by mass or more and 355 parts by mass or less with respect to 100 parts by mass of the sum of the copolymer (A) and the colloidal silica (B) from the viewpoint of improving transparency of the antifogging coating, suppressing air bubbles generated during painting by the increase in viscosity of the antifogging agent composition from remaining in the antifogging coating after curing, and enhancing transparency of the antifogging coating.

The content of the solvent (C-2) is preferably 100 to 800 parts by mass with respect to 100 parts by mass of the sum of the copolymer (A) and the colloidal silica (B). The content of the solvent (C-2) is more preferably 200 parts by mass or more, still more preferably 270 parts by mass or more with respect to 100 parts by mass of the sum of the copolymer (A) and the colloidal silica (B) from the viewpoint of suppressing the occurrence of liquid dripping during painting. The content of the solvent (C-2) is more preferably 690 parts by mass or less, still more preferably 505 parts by mass or less with respect to 100 parts by mass of the sum of the copolymer (A) and the colloidal silica (B) from the viewpoint of improving close contact properties after preliminary drying when a thin film is painted. In other words, the content of the solvent (C-2) is more preferably 200 parts by mass or more and 690 parts by mass or less, and even more preferably 270 parts by mass or more and 505 parts by mass or less with respect to 100 parts by mass of the sum of the copolymer (A) and the colloidal silica (B) from the viewpoint of suppressing the occurrence of liquid dripping during painting and improving close contact properties after preliminary drying when a thin film is painted.

The content of the solvent (C-3) is preferably 25 to 400 parts by mass with respect to 100 parts by mass of the sum of the copolymer (A) and the colloidal silica (B). The content of the solvent (C-3) is more preferably 65 parts by mass or more, still more preferably 90 parts by mass or more with respect to 100 parts by mass of the sum of the copolymer (A) and the colloidal silica (B) from the viewpoint of improving close contact properties during thin film painting. The content of the solvent (C-3) is more preferably 290 parts by mass or less, still more preferably 200 parts by mass or less with respect to 100 parts by mass of the sum of the copolymer (A) and the colloidal silica (B) from the viewpoint of suppressing crack generation during thick film painting. In other words, the content of the solvent (C-3) is more preferably 65 parts by mass or more and 290 parts by mass or less, still more preferably 90 parts by mass or more and 200 parts by mass or less with respect to 100 parts by mass of the sum of the copolymer (A) and the colloidal silica (B) from the viewpoint of improving close contact properties during thin film painting and suppressing crack generation during thick film painting.

The content of the solvent (C-4) is preferably 5 to 400 parts by mass with respect to 100 parts by mass of the sum of the copolymer (A) and the colloidal silica (B). The content of the solvent (C-4) is more preferably 25 parts by mass or more, still more preferably 70 parts by mass or more with respect to 100 parts by mass of the sum of the copolymer (A) and the colloidal silica (B) from the viewpoint of suppressing crack generation during thick film painting. The content of the solvent (C-4) is more preferably 230 parts by mass or less, still more preferably 150 parts by mass or less with respect to 100 parts by mass of the sum of the copolymer (A) and the colloidal silica (B) from the viewpoint of improving close contact properties after preliminary drying when a thin film is painted. In other words, the content of the solvent (C-4) is more preferably 25 parts by mass or more and 230 parts by mass or less, still more preferably 70 parts by mass or more and 150 parts by mass or less with respect to 100 parts by mass of the sum of the copolymer (A) and the colloidal silica (B) from the viewpoint of suppressing crack generation during thick film painting and improving close contact properties after preliminary drying when a thin film is painted.

The total content of the components (C-1) to (C-4) is 550 to 1350 parts by mass with respect to 100 parts by mass of the sum of the copolymer (A) and the colloidal silica (B). The total content of the components (C-1) to (C-4) is more preferably 810 parts by mass or more, still more preferably 900 parts by mass or more with respect to 100 parts by mass of the sum of the copolymer (A) and the colloidal silica (B) from the viewpoint of suppressing air bubbles generated during painting from remaining in the antifogging coating and improving transparency of the antifogging coating. The total content of the components (C-1) to (C-4) is more preferably 1150 parts by mass or less, still more preferably 1015 parts by mass or less with respect to 100 parts by mass of the sum of the copolymer (A) and the colloidal silica (B) from the viewpoint of suppressing liquid dripping during painting. In other words, the total content of the components (C-1) to (C-4) is more preferably 810 parts by mass or more and 1150 parts by mass or less, still more preferably 900 parts by mass or more and 1015 parts by mass or less with respect to 100 parts by mass of the sum of the copolymer (A) and the colloidal silica (B) from the viewpoint of suppressing air bubbles generated during painting from remaining in the antifogging coating, improving transparency of the antifogging coating, and suppressing liquid dripping during painting.

The content of the water (C-1) is preferably 1000 parts by mass or more with respect to 100 parts by mass of the copolymer (A) from the viewpoint of improving the solubility of the copolymer (A) and enhancing transparency of the antifogging coating.

The mass ratio ((C-3)/(C-4)) of the solvent (C-3) to the solvent (C-4) is 0.3 to 15. The mass ratio ((C-3)/(C-4)) of the solvent (C-3) to the solvent (C-4) is preferably within the range of 0.8 to 3.0, more preferably within the range of 1.0 to 2.0 from the viewpoint of improving close contact properties after preliminary drying when a thin film is painted and at the same time suppressing crack generation during thick film painting.

The content of the copolymer (A) is preferably 10% by mass or more, more preferably 15% by mass or more, still more preferably 20% by mass or more in the sum of the copolymer (A) and the colloidal silica (B) from the viewpoint of suppressing crack generation during thick film painting and improving close contact properties of the antifogging coating. The content of the copolymer (A) is preferably 50% by mass or less, more preferably 40% by mass or less, still more preferably 30% by mass or less from the viewpoint of enhancing antifogging properties and water resistance of the antifogging coating.

A curing catalyst may be added to the antifogging agent composition of the present invention from the viewpoint that the composition can be cured by heating at a low temperature in a short time.

Examples of the curing catalyst include alkylsulfonic acid-based compounds such as sulfuric acid, fluorosulfonic acid, methanesulfonic acid, ethanesulfonic acid, and 1-propanesulfonic acid; and arylsulfonic acid-based compounds such as benzenesulfonic acid, dodecylbenzenesulfonic acid, p-toluenesulfonic acid, 4-ethylbenzenesulfonic acid, p-chlorobenzenesulfonic acid, m-xylene-4-sulfonic acid, 3-pyridine sulfonic acid, dinonylnaphthalenesulfonic acid, dinonylnaphthalenedisulfonic acid, and 1-pyrenesulfonic acid. The curing catalyst is preferably an arylsulfonic acid-based compound having a benzyl structure or a naphthalene structure from the viewpoint of being excellent in curing properties and of being less like to remain as water dripping marks. The curing catalyst may be used singly or in combination of two or more types thereof.

In a case of using the curing catalyst, the mass ratio of the curing catalyst/the copolymer (A) is preferably 0.001 or more, more preferably 0.003 or more from the viewpoint of promoting curing and improving water dripping marks and water resistance. The mass ratio of the curing catalyst/the copolymer (A) is preferably 0.03 or less, more preferably 0.01 or less from the viewpoint of not deteriorating the performance of antifogging properties and water dripping marks. In other words, in a case of using the curing catalyst, the mass ratio of the curing catalyst/the copolymer (A) is more preferably 0.001 or more and 0.03 or less, still more preferably 0.003 or more and 0.01 or less from the viewpoint of promoting curing, improving water dripping marks and water resistance, and not deteriorating the performance of antifogging properties and water dripping marks.

A leveling agent may be added to the antifogging agent composition of the present invention from the viewpoint of making the antifogging coating surface smoother.

Examples of the leveling agent include polyether-modified polydimethylsiloxane, polyether-modified polydimethylpolysiloxane, polyether macromer-modified acrylate, acrylic polymers, and acrylic silicon-based polymers.

Examples of commercially available products of the leveling agent include those of trade names: "BYK-300", "BYK-320", "BYK-306", "BYK-307", "BYK-310", "BYK-313", "BYK-315N", "BYK-320", "BYK-322", "BYK-323", "BYK-325", "BYK-330", "BYK-331", "BYK-333", "BYK-342", "BYK-345/346", "BYK-347", "BYK-348", "BYK-349", "BYK-370", "BYK-377", "BYK-378", "BYK-3455", "BYK-3560", "BYK-3565", and "BYK-3566", (manufactured by BYK), those of trade names: "KP-323", "KP-341", "KP-104", "KP-110", "KP-112", "KF-351A", "KF-352A", "KF-353", "KF-354L", "KF-355A", "KF-651A", "KF-945", "KF-640", and "KF-642" (manufactured by Shin-Etsu Chemical Co., Ltd.), those of trade names: "DISPARLON 1970", "DISPARLON 230", "DISPARLON 1711EF", "DISPARLON 1761", "DISPARLON LS-001", "DISPARLON LS-050", "DISPARLON LS-460", and "DISPARLON LS-480" (manufactured by Kusumoto Chemicals, Ltd.), and those of trade names: "POLYFLOW WS", "POLYFLOW WS-314", "POLYFLOW KL-401", "POLYFLOW KL-402", "POLYFLOW KL-403", "POLYFLOW KL-404", POLYFLOW KL-100, POLYFLOW KL-850, POLYFLOW KL-900, LE-604, LE-605, and LE-606 (manufactured by Kyoeisha Chemical Co., Ltd.). The leveling agent may be used singly or in combination of two or more types thereof.

In a case of using the leveling agent, the mass ratio of the leveling agent/the copolymer (A) is preferably 0.001 or more, more preferably 0.005 or more from the viewpoint of enhancing smoothness of the antifogging coating. The mass ratio of the leveling agent/the copolymer (A) is preferably 0.05 or less, more preferably 0.02 or less from the viewpoint of not deteriorating the performance of antifogging properties and water dripping marks. In other words, in a case of using the leveling agent, the mass ratio of the leveling agent/the copolymer (A) is more preferably 0.001 or more and 0.05 or less, still more preferably 0.005 or more and 0.02 or less from the viewpoint of enhancing smoothness of the antifogging coating and not deteriorating the performance of antifogging properties and water dripping marks.

In the antifogging agent composition of the present invention, various conventional additives such as surfactants, antioxidants, ultraviolet absorbers, and light stabilizers may be blended as other components in addition to the components described above, if necessary, within the range in which the performance of water dripping marks and antifogging properties are not deteriorated. Each of the additives may be blended in a conventional addition amount, but the amount of the other components added is usually 5.0 parts by mass or less with respect to 100 parts by mass of the sum of the copolymer (A) and the colloidal silica (B).

### <Antifogging article>

The antifogging article of the present invention is obtained by painting the antifogging agent composition on a base material (object to be painted) by a painting method used for a usual coating material and curing the antifogging agent composition by heating so that an antifogging coating is formed on the surface of the base material (object to be painted). A preliminary drying step may be provided before the heat curing step for the purpose of volatilizing and drying the solvent contained in the antifogging coating immediately after painting.

The base material (object to be painted) may be of any type and is not particularly limited, and examples thereof include resin base materials such as a polymethyl methacrylate resin, a polycarbonate resin, a polystyrene resin, an acrylonitrile-styrene copolymer resin, a polyvinyl chloride resin, an acetate resin, an ABS resin, a polyester resin, and a polyamide resin; and inorganic base materials such as glass. The shape of the base material is not limited, and examples thereof include a film, a sheet, and a molded article having a three-dimensional shape.

When the antifogging agent composition is painted on the base material (object to be painted), foreign matter attached to the surface of the base material (object to be painted) before painting is preferably removed for the purpose of enhancing the property of the antifogging agent composition to wet the base material (object to be painted) and preventing repellence. The removal of foreign matter is performed by, for example, dust removal by high-pressure air or ionized air, ultrasonic cleaning using an aqueous detergent solution or an alcohol solvent, wiping using an alcohol solvent, or cleaning with ultraviolet light and ozone. Examples of the painting method include dipping, flow coating, roll coating, bar coating, and spray coating.

The preliminary drying is usually performed at a temperature of 20°C to 50°C for 0.5 to 10 minutes.

With regard to the heating, in a case where the base material is a resin member, the heating temperature is preferably set to be equal to or lower than the heat distortion temperature of the resin member. The heating time is affected by the heating temperature, and is thus appropriately set. As an example, in a case where the heating temperature is 80°C, the heating time is preferably 10 minutes or more, more preferably 15 minutes or more, and in a case where the heating temperature is 130°C, the heating time is preferably 5 minutes or more, more preferably 10 minutes or more.

The film thickness of the antifogging coating is preferably 0.5 µm or more, more preferably 1 µm or more from the viewpoint of improving close contact properties after preliminary drying when a thin film is painted. The film thickness of the antifogging coating is preferably 20 µm or less, more preferably 10 µm or less, still more preferably 7 µm or less from the viewpoint of suppressing crack generation during thick film painting and suppressing liquid dripping during painting.

The antifogging article can be more favorably applied to articles used in an environment where dew condensation easily occurs, and the application thereof is not limited at all. Examples of the antifogging article include vehicle lighting devices (headlights, auxiliary headlights, vehicle width lights, number lights, tail lights, parking lights, backlights, direction indicator lights, auxiliary direction indicator lights, emergency blinking display and the like) of automobiles, glasses, windows, and mirrors.

### EXAMPLES

Hereinbelow, the present invention will be described in more detail with reference to Examples, but the present invention is not limited only to these Examples.

### <Production of copolymer (A)>

### <Synthesis Example-1>

Into a reaction vessel equipped with a stirring device, a nitrogen introduction pipe, and a cooling pipe, 120 parts by mass of 1-propanol as the solvent (C-2), 60 parts by mass of dimethylacrylamide (DMAA) as the monomer (a-1), 20 parts by mass of N-methylolacrylamide (N-MAA) as the monomer (a-2), and 20 parts by mass of 2-hydroxyethyl acrylate (HEA) as (a-3) were charged, and heated to 75°C while nitrogen gas was blown. A solution of 0.6 parts by mass of a hydrocarbon diluted product of t-hexyl peroxy neodecanoate (trade name: Perhexyl ND, manufactured by NOF Corporation) as a radical polymerization initiator dissolved in 30 parts by mass of 1-propanol was added dropwise thereto over 3 hours. Polymerization was further carried out for 2 hours to obtain a solution of a copolymer (A-1) of Example 1 having a copolymer concentration of 40% by mass and a number average molecular weight (Mn) of 94,000.

### <Synthesis Examples 2 to 6>

Copolymers (A) of Synthesis Examples 2 to 6 were produced in the same manner as in Synthesis Example 1 except that the raw materials in Synthesis Example-1 were changed to the raw materials listed in Table 1 and the proportions of the raw materials were changed in each of Synthesis Examples.

**[Table 1]**

| Copolymer solution (A) | | | Synthesis Example 1 | Synthesis Example 2 | Synthesis Example 3 | Synthesis Example 4 | Synthesis Example 5 | Synthesis Example 6 |
|---|---|---|---|---|---|---|---|---|
| | | | A-1 | A-2 | A-3 | A- 4 | A-5 | A' -1 |
| Monomer | (a-1) | DMAA | 60 | 84 | 34 | | 60 | 60 |
| | | DEAA | | | | 60 | | |
| | (a-2) | N-MAA | 20 | 8 | 33 | 20 | 20 | 20 |
| | (a-3) | HEA | 20 | 8 | 33 | 20 | | 20 |
| | | HEMA | | | | | 20 | |
| Total | | | 100 | 100 | 100 | 100 | 100 | 100 |
| Polymerization solvent | | | 1-Propanol | 1-Propanol | 1-Propanol | 1-Propanol | 1-Propanol | 3-Methoxy-1-butanol |
| Copolymer concentration (% by mass) | | | 40 | 40 | 40 | 40 | 40 | 40 |
| Number average molecular weight (Mn) | | | 94, 000 | 92, 000 | 100,000 | 95,000 | 120,000 | 180,000 |

The abbreviations in Table 1 are as follows.
- DMAA: (N,N-Dimethylacrylamide)
- DEAA: (N,N-Diethylacrylamide)
- N-MAA: (N-Methylolacrylamide)
- HEA: (2-Hydroxyethyl acrylate)
- HEMA: (2-Hydroxyethyl methacrylate)

### <Example 1>

### <Production of antifogging agent composition>

To 62.5 parts by mass of the copolymer (A-1) solution obtained above (25 parts by mass in terms of solid content), 362.5 parts by mass of 1-propanol as the solvent (C-2), 150 parts by mass of diacetone alcohol as the solvent (C-3), and 100 parts by mass of 3-methoxy-1-butanol as the solvent (C-4) were added, and 375 parts by mass (75 parts by mass in terms of solid content) of SNOWTEX O (manufactured by Nissan Chemical Corporation, acidic sol type, average particle diameter 12 nm, solid content 20%) as the colloidal silica (B), 0.1 parts by mass of dinonylnaphthalenedisulfonic acid as a curing catalyst, and 0.3 parts by mass of polyether-modified polydimethylsiloxane (trade name: BYK333, manufactured by BYK) as a leveling agent were mixed to produce an antifogging agent composition having a solid content of 9.6%.

### <Fabrication of antifogging article>

The antifogging agent composition obtained above was painted by spray coating on a 3 mm thick polycarbonate (PC) plate in an environment of 25°C and 30%RH so that the antifogging coating after curing had a film thickness of about 1 to 5 µm, and cured by heating at 120°C for 20 minutes to fabricate an antifogging article (test specimen) having an antifogging coating.

The following evaluations were conducted using the antifogging agent compositions and test specimens obtained above. The evaluation results are presented in Table 2.

### <(1) Antifogging properties>

### <(1-1) Steam test>

The test specimen was placed at a height of 5 cm from the water surface of a warm water bath maintained at 80°C so that the antifogging coating surface faced downward, the antifogging coating in a predetermined 5 cm × 5 cm region was continuously irradiated with steam from the warm water bath, and the presence or absence of fogging for 10 seconds from the start of steam irradiation was visually evaluated according to the following 4 point scale. When the evaluation is △ or more, there is no problem in practical use, ○ is preferable, and ⊙ is more preferable.
⊙: Water film is formed immediately after steam irradiation and fogging does not occur.
O: Fogging is observed for a moment immediately after steam irradiation, but water film is immediately formed and fogging disappears.
△: Fogging is observed immediately after steam irradiation, but water film is formed and fogging disappears.
×: Fogging is observed immediately after steam irradiation, and water film is not formed.

### <(1-2) Repeated steam test (durability test)>

The test specimen was placed at a height of 5 cm from the water surface of a warm water bath maintained at 80°C so that the antifogging coating surface faced downward, the antifogging coating in a predetermined 5 cm × 5 cm region was continuously irradiated with steam from the warm water bath for 10 seconds, and the test specimen was then dried at room temperature for 1 hour in a state of being set up vertically. After this operation was repeated 50 times, the presence or absence of fogging for 10 seconds from the start of steam irradiation was visually evaluated according to the following 4 point scale. When the evaluation is △ or more, there is no problem in practical use, ○ is preferable, and ⊙ is more preferable.
⊙: Water film is formed immediately after steam irradiation and fogging does not occur.
O: Fogging is observed for a moment immediately after steam irradiation, but water film is immediately formed and fogging disappears.
△: Fogging is observed immediately after steam irradiation, but water film is formed and fogging disappears.
×: Fogging is observed immediately after steam irradiation, and water film is not formed.

### <(2) Transparency>

The haze of the test specimens obtained in <Fabrication of antifogging article> was measured using a haze meter NDH5000 manufactured by NIPPON DENSHOKU INDUSTRIES CO., LTD.. The blank was measured with air (without base material), and the transparency was evaluated based on the HAZE value according to the following 4 point scale. In this test, when the evaluation is △ or more, there is no problem in practical use. ○ is preferable, and ⊙ is more preferable. The HAZE value of a 3 mm thick polycarbonate (PC) plate was 0.30.
⊙: HAZE value of 0.3 to 0.4
○: HAZE value of 0.4 to 0.6
△: HAZE value of 0.6 to 0.8
×: HAZE value of 0.8 or more

### <(3) Close contact properties>

### <(3-1) Initial close contact properties>

A region of 1 cm in length and 1 cm in width on the antifogging coating surface was cut at intervals of 1 mm in length and width using a cutter knife to form 100 grids. Cellophane tape was strongly pressed onto this grid area, the ends of the tape were pulled off at once at an angle of 45°, and the state of the grids was visually evaluated according to the following 3 point scale. When the evaluation is ○ or more, there is no problem in practical use, and ⊙ is more preferable.
⊙: Peeling off is not observed at all
O: Peeling off is partially observed
×: All grids are peeled off

### <(3-2) Close contact properties after preliminary drying during thin film painting>

The antifogging agent composition obtained above was painted on a polycarbonate (PC) plate by spray coating so that the film thickness of the antifogging coating after curing was 1 µm, preliminarily dried for 3 minutes and 5 minutes at 25°C and 50%RH, and then cured by heating at 120°C for 20 minutes to obtain an antifogging coating, and a region of 1 cm in length and 1 cm in width on the antifogging coating surface was cut at intervals of 1 mm in length and width using a cutter knife to form 100 grids. Cellophane tape was strongly pressed onto this grid area, the ends of the tape were pulled off at once at an angle of 45°, and the state of the grids was visually evaluated according to the following 3 point scale. When the evaluation is ○ or more, there is no problem in practical use, and ⊙ is more preferable.
⊙: Peeling off is not observed at all
O: Peeling off is partially observed
×: All grids are peeled off

### <(4) Water dripping marks>

The test specimen was placed at a height of 5 cm from the water surface of a warm water bath maintained at 80°C so that the antifogging coating surface faced downward, the antifogging coating in a predetermined 5 cm × 5 cm region was continuously irradiated with steam from the warm water bath for 10 seconds, and the test specimen was set up vertically to cause water dripping and allowed to still stand horizontally and dried at room temperature. After drying, the presence or absence of water dripping marks was visually evaluated according to the following 4 point scale. When the evaluation is △ or more, there is no problem in practical use. ○ is preferable, and ⊙ is more preferable.
⊙: Water dripping marks are not observed at all
O: Water dripping marks are hardly observed
△: Water dripping marks are not noticeable
×: Water dripping marks are noticeable

### <(5) Cracking during thick film painting>

The antifogging agent composition obtained above was painted on a polycarbonate (PC) plate by spray coating and cured by heating at 120°C for 20 minutes to obtain an antifogging coating, and the thinnest film thickness at which cracking occurred in the obtained antifogging coating was measured using a film thickness meter F20-EXR manufactured by Filmetrics Japan, Inc. and evaluated according to the following 4 point scale. When the evaluation is △ or more, there is no problem in practical use, ○ is preferable, and ⊙ is more preferable.
⊙: Cracking occurs in film thickness of 6 µm or more
○: Cracking occurs in film thickness of 5 to 6 µm
△: Cracking occurs in film thickness of 4 to 5 µm
×: Cracking occurs in film thickness of less than 4 µm

### <(6) Water resistance>

The test specimen was immersed in warm water at 40°C for 240 hours and then allowed to still stand at room temperature for 1 hour, and then the appearance of the antifogging coating was visually evaluated according to the following 4 point scale. When the evaluation is ○ or more, there is no problem in practical use, and ⊙ is more preferable.
⊙: Appearance is not changed from that before test
O: Antifogging coating surface is slightly rough
×: Antifogging coating surface is peeled off

### <(7) Paintability (liquid dripping)>

The antifogging agent composition obtained above was painted on a polycarbonate (PC) plate as a painting base material by spray coating and the painted polycarbonate (PC) plate was set up vertically and dried, and the thickest film thickness at which dripping of the painting solution did not occur at this time was measured using a film thickness meter F20-EXR manufactured by Filmetrics Japan, Inc. and evaluated according to the following 4 point scale. When the evaluation is △ or more, there is no problem in practical use, ○ is preferable, and ⊙ is more preferable.
⊙: Liquid dripping occurs in film thickness of 6 µm or more
O: Liquid dripping occurs in film thickness of 5 to 6 µm
△: Liquid dripping occurs in film thickness of 4 to 5 µm
×: Liquid dripping occurs in film thickness of less than 4 µm

### <Examples 2 to 33 and Comparative Examples 1 to 10>

### <Production of antifogging agent composition and fabrication of antifogging article>

Antifogging agent compositions of Examples 2 to 33 and Comparative Examples 1 to 10 were prepared in the same manner as in Example 1 except that the raw materials of Example 1 were changed to the raw materials listed in Tables 2 to 5 and the proportions of the raw materials were changed in each of Examples and Comparative Examples. Furthermore, antifogging articles (test specimens) having an antifogging coating of Examples 2 to 33 and Comparative Examples 1 to 10 were fabricated in the same manner as in Example 1.

The same evaluations as in Example 1 were conducted using the antifogging agent compositions and test specimens obtained above. The results are presented in Tables 2 to 5.

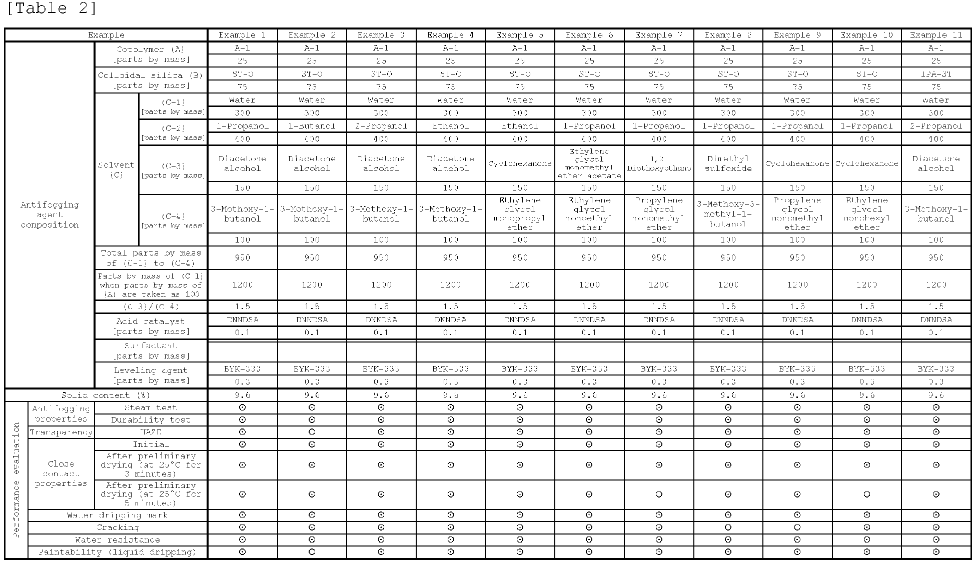

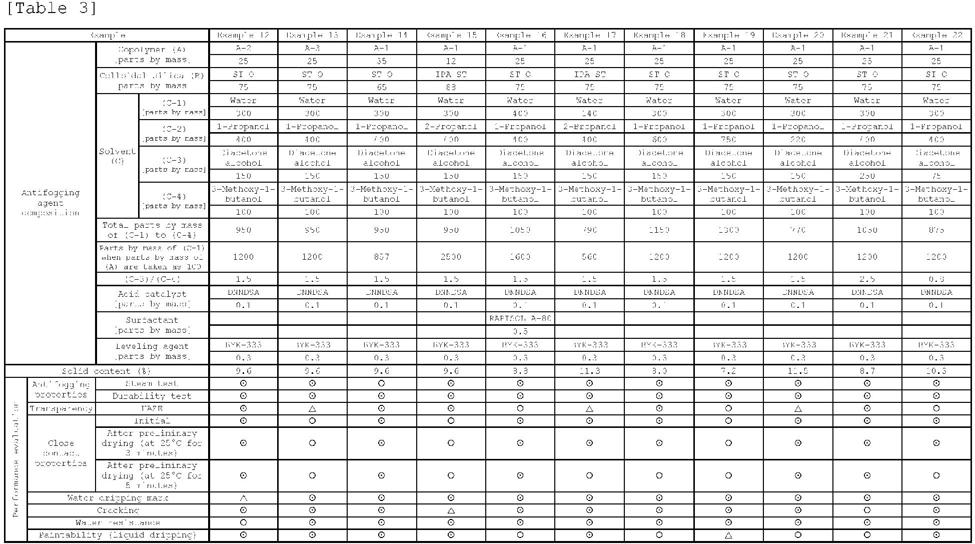

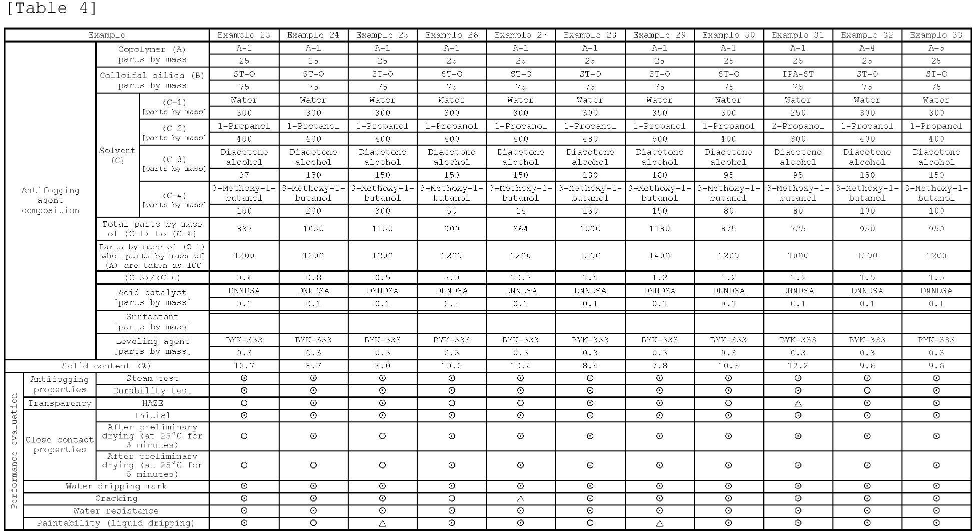

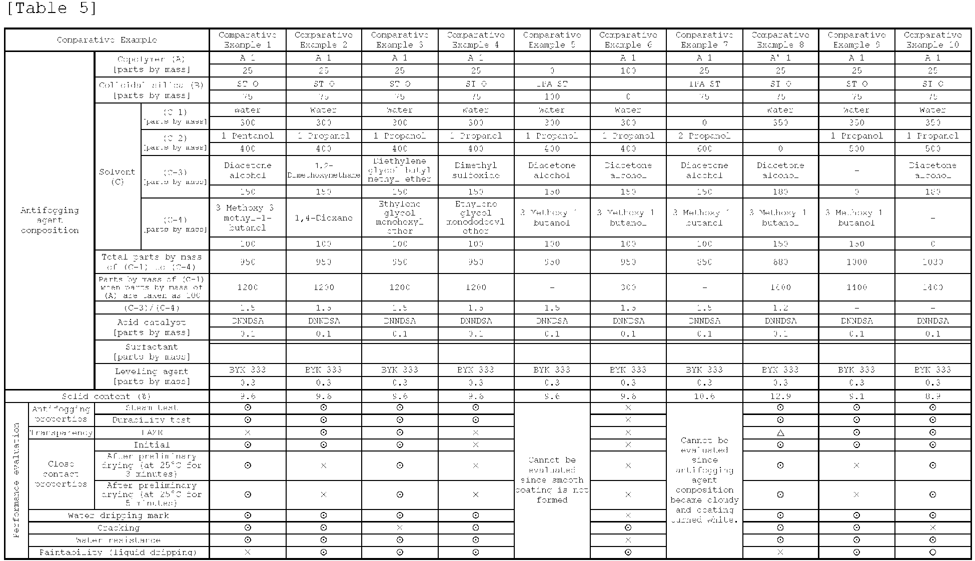

The abbreviations in Tables 2 to 5 are as follows.
ST-O (Trade name: "SNOWTEX O", average particle diameter 12 nm, silica sol dispersed in water, manufactured by Nissan Chemical Corporation, active component 20% by mass)
IPA-ST (Trade name: "IPA-ST", average particle diameter 12 nm, silica sol dispersed in 2-propanol, manufactured by Nissan Chemical Corporation, active component 30% by mass)
DNNDSA (Dinonylnaphthalenedisulfonic acid)
RAPISOL A-80 (Trade name: "Rapisol A-80", sulfosuccinic acid diester salt, manufactured by NOF CORPORATION)
BYK-333 (Trade name: "BYK333", polyether-modified polydimethylsiloxane, manufactured by BYK)

## Claims

1. An antifogging agent composition comprising a copolymer (A), a colloidal silica (B), and a solvent (C), wherein
the copolymer (A) is a (meth)acrylate copolymer obtained from a monomer mixture containing
a monomer (a-1) represented by General Formula (1): 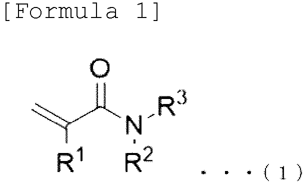
(in General Formula (1), R¹ is a hydrogen atom or a methyl group and R² and R³ are independently a hydrogen atom or a linear or branched alkyl group having 1 to 4 carbon chains);
a monomer (a-2) represented by General Formula (2): 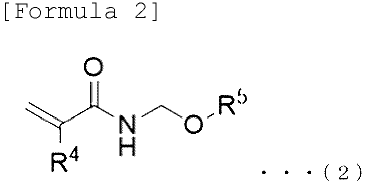
(in General Formula (2), R⁴ is a hydrogen atom or a methyl group and R⁵ is a hydrogen atom or a linear or branched alkyl group having 1 to 8 carbon atoms); and
one or more monomers (a-3) selected from the group consisting of
a monomer having a hydroxyl group and being represented by General Formula (3): 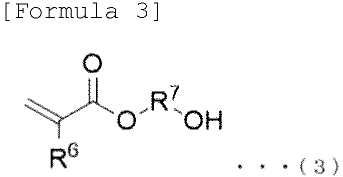
(in General Formula (3), R⁶ is a hydrogen atom or a methyl group and R⁷ is a linear or branched alkylene group having 1 to 8 carbon atoms), and
a monomer having a hydroxyl group and being represented by General Formula (4): 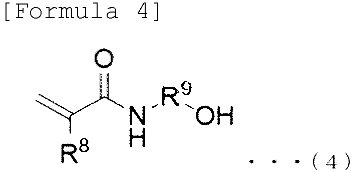
(in General Formula (4), R⁸ is a hydrogen atom or a methyl group and R⁹ is a linear or branched alkylene group having 2 to 8 carbon atoms),
the solvent (C) contains water (C-1);
a monohydric alcohol-based solvent (C-2) having 1 to 4 carbon atoms;
a solvent (C-3) having at least one functional group selected from the group consisting of a ketone group, an ester group, two or more ether groups, a thioketone group, and an amide group in a molecule and having a boiling point of 100°C or more and 200°C or less at 1 atmosphere; and
a glycol ether-based solvent (C-4) represented by General Formula (5): R¹⁰-O-R¹¹-OH
(in General Formula (5), R¹⁰ is a linear or branched alkyl group having 1 or more and 8 or less carbon atoms, R¹¹ is a linear or branched alkylene group having 2 or more and 5 or less carbon atoms, and a total number of carbon atoms in R¹⁰ and R¹¹ is 3 or more and 12 or less),
a sum of the water (C-1), the solvent (C-2), the solvent (C-3), and the solvent (C-4) is 550 to 1350 parts by mass with respect to 100 parts by mass of a sum of the copolymer (A) and the colloidal silica (B), and
a mass ratio ((C-3)/(C-4)) of the solvent (C-3) to the solvent (C-4) is 0.3 to 15.

2. The antifogging agent composition according to claim 1, wherein a proportion of the monomer (a-1) is 30% to 80% by mass, a proportion of the monomer (a-2) is 5% to 35% by mass, and a proportion of the monomer (a-3) is 5% to 35% by mass in the monomer mixture.

3. The antifogging agent composition according to claim 1 or 2, wherein a proportion of the copolymer (A) in a sum of the copolymer (A) and the colloidal silica (B) is 10% to 50% by mass.

4. An antifogging article comprising an antifogging coating formed from the antifogging agent composition according to claim 1 or 2 on a base material.

## Patentansprüche

1. Antibeschlagmittelzusammensetzung, umfassend ein Copolymer (A), ein kolloidales Siliciumdioxid (B) und ein Lösungsmittel (C), wobei
das Copolymer (A) ein (Meth)acrylat-Copolymer ist, das aus einer Monomerzusammensetzung erhalten wird, enthaltend
ein durch die allgemeine Formel (1) dargestelltes Monomer (a-1): 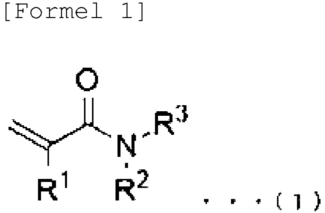
(in der allgemeinen Formel (1) ist R¹ ein Wasserstoffatom oder eine Methylgruppe und R² und R³ sind unabhängig ein Wasserstoffatom oder eine lineare oder verzweigte Alkylgruppe mit 1 bis 4 Kohlenstoffketten),
ein durch die allgemeine Formel (2) dargestelltes Monomer (a-2): 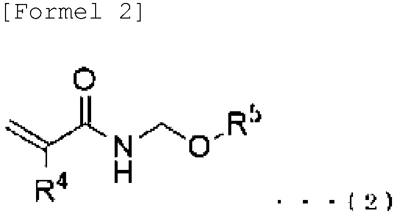
(in der allgemeinen Formel (2) ist R⁴ ein Wasserstoffatom oder eine Methylgruppe und R⁵ ist ein Wasserstoffatom oder eine lineare oder verzweigte Alkylgruppe mit 1 bis 8 Kohlenstoffatomen) und
ein oder mehrere Monomere (a-3), ausgewählt aus der Gruppe, bestehend aus
einem Monomer, das eine Hydroxylgruppe aufweist und durch die allgemeine Formel (3) dargestellt wird: 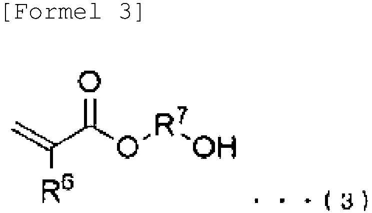
(in der allgemeinen Formel (3) ist R⁶ ein Wasserstoffatom oder eine Methylgruppe und R⁷ ist eine lineare oder verzweigte Alkylengruppe mit 2 bis 8 Kohlenstoffatomen) und
einem Monomer, das eine Hydroxylgruppe aufweist und durch die allgemeine Formel (4) dargestellt wird: 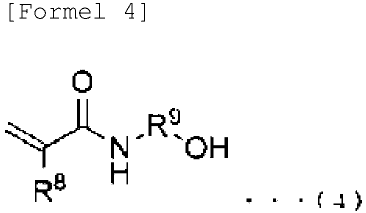
(in der allgemeinen Formel (4) ist R⁸ ein Wasserstoffatom oder eine Methylgruppe und R⁹ ist eine lineare oder verzweigte Alkylengruppe mit 2 bis 8 Kohlenstoffatomen),
das Lösungsmittel (C) Wasser (C-1),
ein Lösungsmittel auf Basis eines einwertigen Alkohols (C-2) mit 1 bis 4 Kohlenstoffatomen,
ein Lösungsmittel (C-3) mit mindestens einer funktionellen Gruppe, ausgewählt aus der Gruppe, bestehend aus einer Ketongruppe, einer Estergruppe, zwei oder mehr Ethergruppen, einer Thioketongruppe und einer Amidgruppe, in einem Molekül und mit einem Siedepunkt von 100°C oder mehr und 200°C oder weniger bei 1 Atmosphäre und
ein durch die allgemeine Formel (5) dargestelltes Lösungsmittel auf Glykoletherbasis (C-4) enthält:
R¹⁰-O-R¹¹-OH
(in der allgemeinen Fromel (5) ist R¹⁰ eine lineare oder verzweigte Alkylgruppe mit 1 oder mehr und 8 oder weniger Kohlenstoffatomen, R¹¹ ist eine lineare oder verzweigte Alkylengruppe mit 2 oder mehr und 5 oder weniger Kohlenstoffatomen und eine Gesamtanzahl an Kohlenstoffatomen in R¹⁰ und R¹¹ ist 3 oder größer und 12 oder kleiner),
eine Summe aus dem Wasser (C-1), dem Lösungsmittel (C-2), dem Lösungsmittel (C-3) und dem Lösungsmittel (C-4) 550 bis 1.350 Masseteile in Bezug auf 100 Masseteile einer Summe aus dem Copolymer (A) und dem kolloidalen Siliciumdioxid (B) beträgt und
ein Massenverhältnis ((C-3)/(C-4)) des Lösungsmittels (C-3) zum Lösungsmittel (C-4) 0,3 bis 15 beträgt.

2. Antibeschlagmittelzusammensetzung gemäß Anspruch 1, wobei in der Monomermischung ein Anteil des Monomers (a-1) 30 bis 80 Masse-% beträgt ein Anteil des Monomers (a-2) 5 bis 35 Masse-% beträgt und ein Anteil des Monomers (a-3) 5 bis 35 Masse-% beträgt.

3. Antibeschlagmittelzusammensetzung gemäß Anspruch 1 oder 2, wobei ein Anteil des Copolymers (A) in einer Summe aus dem Copolymer (A) und dem kolloidalen Siliciumdioxid (B) 10 bis 50 Masse-% beträgt.

4. Antibeschlagartikel, umfassend eine Antibeschlagbeschichtung, die aus der Antibeschlagmittelzusammensetzung gemäß Anspruch 1 oder 2 gebildet ist, auf einem Basismaterial.

## Revendications

1. Composition d'agent antibuée comprenant un copolymère (A), une silice colloïdale (B), et un solvant (C), dans laquelle
le copolymère (A) est un copolymère de (méth)acrylate obtenu à partir d'un mélange de monomères contenant
un monomère (a-1) représenté par la formule générale (1) : 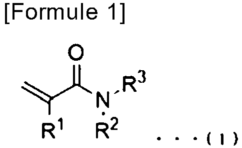
(dans la formule générale (1), R¹ est un atome d'hydrogène ou un groupe méthyle et R² et R³ sont indépendamment un atome d'hydrogène ou un groupe alkyle linéaire ou ramifié présentant 1 à 4 atomes de carbone) ;
un monomère (a-2) représenté par la formule générale (2) : 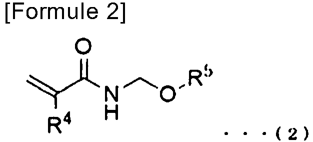
(dans la formule générale (2), R⁴ est un atome d'hydrogène ou un groupe méthyle et R⁵ est un atome d'hydrogène ou un groupe alkyle linéaire ou ramifié présentant 1 à 8 atomes de carbone) ; et
un ou plusieurs monomères (a-3) choisis dans le groupe constitué de
un monomère présentant un groupe hydroxyle et étant représenté par la formule générale (3) : 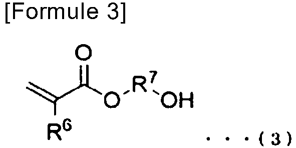
(dans la formule générale (3), R⁶ est un atome d'hydrogène ou un groupe méthyle et R⁷ est un groupe alkylène linéaire ou ramifié présentant 1 à 8 atomes de carbone), et
un monomère présentant un groupe hydroxyle et étant représenté par la formule générale (4) : 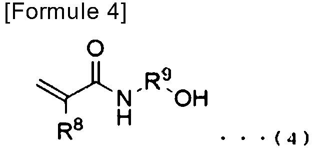
(dans la formule générale (4), R⁸ est un atome d'hydrogène ou un groupe méthyle et R⁹ est un groupe alkylène linéaire ou ramifié présentant 2 à 8 atomes de carbone),
le solvant (C) contient de l'eau (C-1) ;
un solvant à base d'alcool monohydrique (C-2) présentant 1 à 4 atomes de carbone ;
un solvant (C-3) présentant au moins un groupe fonctionnel choisi dans le groupe constitué d'un groupe cétone, d'un groupe ester, de deux ou plusieurs groupes éther, d'un groupe thiocétone, et d'un groupe amide dans une molécule et présentant un point d'ébullition de 100 °C ou plus et de 200 °C ou moins à 1 atmosphère ; et
un solvant à base d'éther de glycol (C-4) représenté par la formule générale (5) : R¹⁰-O-R¹¹-OH
(dans la formule générale (5), R¹⁰ est un groupe alkyle linéaire ou ramifié présentant 1 ou plus et 8 ou moins atomes de carbone, R¹¹ est un groupe alkylène linéaire ou ramifié présentant 2 ou plus et 5 ou moins atomes de carbone, et un nombre total d'atomes de carbone dans R¹⁰ et R¹¹ est de 3 ou plus et de 12 ou moins),
une somme de l'eau (C-1), du solvant (C-2), du solvant (C-3), et du solvant (C-4) est de 550 à 1350 parties en masse par rapport à 100 parties en masse d'une somme du copolymère (A) et de la silice colloïdale (B), et
un rapport massique ((C-3)/(C-4)) du solvant (C-3) au solvant (C-4) est de 0,3 à 15.

2. Composition d'agent antibuée selon la revendication 1, dans laquelle une proportion du monomère (a-1) est de 30 % à 80 % en masse, une proportion du monomère (a-2) est de 5 % à 35 % en masse, et une proportion du monomère (a-3) est de 5 % à 35 % en masse dans le mélange de monomères.

3. Composition d'agent antibuée selon la revendication 1 ou la revendication 2, dans laquelle une proportion du copolymère (A) dans une somme du copolymère (A) et de la silice colloïdale (B) est de 10 % à 50 % en masse.

4. Article antibuée comprenant un revêtement antibuée formé à partir de la composition d'agent antibuée selon la revendication 1 ou 2 sur un matériau de base.
